# EUROPEAN PATENT APPLICATION

(11) **EP 4 738 505 A1**
(43) Date of publication of application: **06.05.2026**
(21) Application number: 25203645.4
(22) Date of filing: 22.09.2025
(51) Int. Cl.: H01M 10/0525, H01M 10/056

(54) **SOLID-STATE BATTERY AND APPLICATION THEREOF**

(30) Priority: 31.10.2024 CN 202411545107
(71) Applicant: AESC Japan Ltd., Yokohama-shi, Kanagawa 220-0012 (JP)
(72) Inventor: YU, Le, Pudong New Area Shanghai, 201315 (CN); WU, Ming, Pudong New Area Shanghai, 201315 (CN)
(74) Representative: Becker, Eberhard

(57) **Abstract**

Provided are a solid-state battery (10) and an application thereof. The solid-state battery (10) at least includes: a first solid-state electrolyte layer (131), disposed on a positive electrode (11) side of the solid-state battery (10), an ionic conductivity of the first solid-state electrolyte layer (131) being 1×10⁻⁴S/cm to 1×10⁻²S/cm; and a second solid-state electrolyte layer (132), disposed on a negative electrode (12) side of the solid-state battery (10), an ionic conductivity of the second solid-state electrolyte layer (132) being 1×10⁻³S/cm to 2×10⁻²S/cm. Through the solid-state battery (10) and the application thereof, the solid-state electrolyte membrane of the solid-state battery (10) may have advantages of high lithium ion conductivity, excellent electrochemical redox stability, and good compatibility with positive electrode (11) and negative electrode (12), thereby improving a performance of the solid-state battery (10).

## Description

### BACKGROUND

### Technical Field

The disclosure relates to a field of battery technology, and specifically relates to a solid-state battery and an application thereof.

### Related Art

With the rapid development of electric vehicles and wearable devices, the demand for high-performance lithium ion batteries is increasing. Solid-state batteries, as a type of lithium ion battery, have received widespread attention due to advantages such as high energy density, good safety, and strong durability. However, in the practical application of the solid-state batteries, solid-state electrolyte membranes are difficult to have advantages of good film-forming properties, high lithium ion ionic conductivity, excellent electrochemical redox stability, and good compatibility with positive and negative electrodes, thereby limiting the development and application of the solid-state batteries.

### SUMMARY

The disclosure provides a solid-state battery and an application thereof. Through the solid-state battery and application thereof provided by the disclosure, the solid-state electrolyte membrane of the solid-state battery may have advantages of high lithium ion ionic conductivity, excellent electrochemical redox stability, and good compatibility with positive and negative electrodes, thereby improving a performance of the solid-state battery.

To solve the aforementioned technical problems, the disclosure provides a solid-state battery, at least including: a first solid-state electrolyte layer, disposed on a positive electrode side of the solid-state battery, where an ionic conductivity of the first solid-state electrolyte layer is 1×10⁻⁴S/cm to 1×10⁻²S/cm; and a second solid-state electrolyte layer, disposed on a negative electrode side of the solid-state battery, where an ionic conductivity of the second solid-state electrolyte layer is 1×10⁻³S/cm to 2×10⁻²S/cm.

In an embodiment of the disclosure, the first solid-state electrolyte layer includes a first electrolyte, where a chemical formula of the first electrolyte is Li₂₊ₙZr₁₋ₙMₙCl_{6-x-y}BrₓI_{y}, 0≤n≤0.6, 0≤x≤6, 0≤y≤6, x+y<6, and M is selected from at least one of V, Cr, Mn, Fe, Co, or Ni.

In an embodiment of the disclosure, M is Fe, and a range of n is 0.01≤n≤0.5.

In an embodiment of the disclosure, the second solid-state electrolyte layer includes a second electrolyte, where a chemical formula of the second electrolyte is LiₐP_{1-b}T_{b}S_{c}O_{d}Xₑ, 5<a<6, 0<b<1, 1.5<c<5, 0<d<2.5, 4<c+d<5, 1<e<2, T is selected from at least one of Al, Ga, In, Ti, Sc, As, Sb, Bi, As, V, or Nb, and X is selected from at least one of Cl, Br, or I.

In an embodiment of the disclosure, T is selected from at least one of Sb, In, or Bi, X is Cl, and a range of b is 0<b<0.1.

In an embodiment of the disclosure, the second solid-state electrolyte layer includes a second electrolyte, where a chemical formula of the second electrolyte is Li_{f}P_{1-g}E_{g}S_{w}O_{g}Q_{z}, 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

In an embodiment of the disclosure, E is Mg, Q is Cl, and a range of g is 0.01<g<0.1.

In an embodiment of the disclosure, a thickness of the first solid-state electrolyte layer is 1µm to 100µm.

In an embodiment of the disclosure, a thickness of the second solid-state electrolyte layer is 5µm to 150µm.

The disclosure also provides an electronic device, including the aforementioned solid-state battery.

In summary, the disclosure provides the solid-state battery and the application thereof, which may enable the solid-state electrolyte membrane of the solid-state battery to have the advantage of high lithium ion conductivity, thereby improving the working efficiency of the battery. The electrochemical redox stability of the solid-state electrolyte membrane may be improved, and therefore the electrolyte may effectively resist problems such as redox reactions and electrode interface instability. The electrochemical window of the solid-state electrolyte membrane may be broaden, and therefore the solid-state electrolyte membrane may be compatible with high-voltage positive electrodes such as lithium-rich manganese-based or lithium nickel manganese oxide to improve the stability of the lithium ion battery. Moreover, the cycle performance of the solid-state battery may be improved, thereby extending the service life of the battery.

### BRIEF DESCRIPTION OF THE DRAWINGS

In order to more clearly illustrate the technical solutions of the embodiments of the disclosure, the drawings required for describing the embodiments are briefly introduced below. Obviously, the drawings described below are merely some embodiments of the disclosure. For those skilled in the art, other drawings may also be obtained according to these drawings without creation.
FIG. 1 is a structural diagram of a solid-state battery in an embodiment of the disclosure.
FIG. 2 is a process schematic diagram of preparing a first solid-state electrolyte layer and a second solid-state electrolyte layer in an embodiment of the disclosure.
FIG. 3 is a scanning electron microscope image of a solid-state electrolyte membrane in an embodiment of the disclosure.
FIG. 4 is a result diagram of room-temperature cycle performance testing conducted on a solid-state battery in Example 2 of the disclosure.

Descriptions of reference numerals:
10. all-solid-state battery; 11. positive electrode; 12. negative electrode; 13. solid electrolyte membrane; 131. first solid electrolyte layer; 132. second solid electrolyte layer.

### DESCRIPTION OF THE EMBODIMENTS

An implementation of the disclosure is illustrated below through specific examples. Those skilled in the art may easily understand other advantages and effects of the disclosure from the content disclosed in this specification. The disclosure may also be implemented or applied through other different specific examples, and various details in this specification may also be modified or changed based on different viewpoints and applications without departing from the spirit of the disclosure.

It should be understood that the disclosure may be implemented in different forms and should not be interpreted as being limited to the examples presented herein. On the contrary, providing these examples may make the disclosure thorough and complete, and fully convey the range of the disclosure to those skilled in the art.

The technical solutions of the disclosure are described in further detail below in conjunction with examples. Obviously, the described examples are only part of the examples of the disclosure, not all examples. Based on the examples in the disclosure, all other examples obtained by those of ordinary skill in the art without creation fall within the scope of protection of the disclosure.

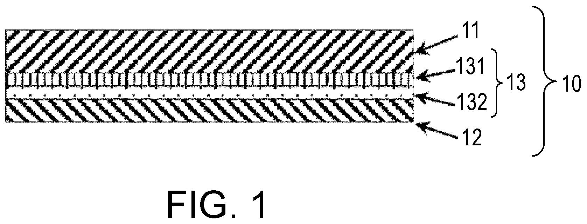

Referring to FIG. 1, the disclosure provides a solid-state battery 10 including, for example, a positive electrode 11, a negative electrode 12, and a solid-state electrolyte membrane 13. The solid-state electrolyte membrane 13 is disposed between the positive electrode 11 and the negative electrode 12, and includes, for example, a first solid-state electrolyte layer 131 and a second solid-state electrolyte layer 132 arranged in a laminated manner. The first solid-state electrolyte layer 131 is disposed on a side of the positive electrode 11. The second solid-state electrolyte layer 132 is disposed on a side of the negative electrode 12. In the solid-state battery 10 provided by the disclosure, the solid-state electrolyte membrane 13 may have advantages of high lithium ion conductivity, excellent electrochemical redox stability, and good compatibility with positive and negative electrodes, thereby improving the cycle performance, stability, and safety of the battery. Specifically, the first solid-state electrolyte layer 131 enables the solid-state electrolyte membrane 13 to match high-voltage positive electrodes, and the second solid-state electrolyte layer 132 may provide high lithium ion conductivity and good electrochemical redox stability. In the disclosure, the solid-state battery 10 is, for example, a primary battery or a secondary battery, and the secondary battery is, for example, a pouch battery, a hard case battery, or a cylindrical battery. The disclosure does not specifically limit a type and a category of the solid-state battery 10.

Please refer to FIG. 1. In an embodiment of the disclosure, the positive electrode 11 includes, for example, a positive electrode active material, a solid-stae electrolyte, a conductive agent, and a binder. The positive electrode active material is selected from, for example, at least one of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA). The solid-state electrolyte is, for example, a halide electrolyte that does not undergo an exothermic reaction with the positive electrode active material to improve the safety of the battery. The conductive agent is selected from, for example, at least one of conductive carbon black (Super P), vapor-grown carbon fiber (VGCF), acetylene black, carbon nanotubes, or graphene. The binder is selected from, for example, at least one of polytetrafluoroethylene (PTFE), polyvinylidene fluoride, polyethylene oxide, polyamide, polyacrylonitrile, polyacrylate, polyvinyl ether, polymethyl methacrylate, ethylene-propylene-diene terpolymer, polyhexafluoropropylene, or polymerized styrene butadiene rubber (SBR). The disclosure does not limit a mass ratio of the positive electrode active material, the solid electrolyte, the conductive agent, and the binder, which may be selected according to actual needs.

Please refer to FIG. 1. In an embodiment of the disclosure, the positive electrode active material is, for example, LiNi_{0.8}Co_{0.1}Mn_{0.1}O₂. A chemical formula of the halide electrolyte is, for example, Li_{2.35}Zr_{0.65}Fe_{0.35}Cl₅Br_{0.5}I_{0.5}. The conductive agent includes, for example, Super P and VGCF, and a mass ratio of Super P and VGCF is, for example, 1:1. The binder is, for example, PTFE. The positive electrode active material, the halide electrolyte, the conductive agent, and the binder are mixed uniformly according to a mass ratio of, for example, 69:29:1:1, and then the positive electrode 11 is obtained through dry pressing.

Please refer to FIG. 1. In an embodiment of the disclosure, a material of the negative electrode 12 is selected from, for example, at least one of a metallic lithium negative electrode material, a carbon-based negative electrode material, or an oxide negative electrode material. The carbon-based negative electrode material includes, for example, a carbon-based material, a silicon-based material, and a tin-based material. The oxide negative electrode material includes, for example, a metal oxide, a metal-based composite oxide, and other oxides. In this embodiment, the negative electrode 12 is, for example, metallic lithium.

Please refer to FIG. 1. In an embodiment of the disclosure, a thickness of the solid-state electrolyte membrane 13 is, for example, 5µm to 200µm, and an ionic conductivity thereof is, for example, 1×10⁻⁴S/cm to 2×10⁻²S/cm. A thickness of the first solid-state electrolyte layer 131 is, for example, 1µm to 100µm, and an ionic conductivity thereof is, for example, 1×10⁻⁴S/cm to 1×10⁻²S/cm. A thickness of the second solid-state electrolyte layer 132 is, for example, 5µm to 150µm, and an ionic conductivity thereof is, for example, 1×10⁻³S/cm to 2×10⁻²S/cm. By controlling the thickness of the solid-state electrolyte membrane 13, the thickness of the first solid-state electrolyte layer 131, and the thickness of the second solid-state electrolyte layer 132, the cycle performance of the solid-state battery 10 may be improved, thereby extending a service life of the battery.

Please refer to FIG. 1. In an embodiment of the disclosure, the first solid-state electrolyte layer 131 includes a first electrolyte. The first electrolyte is, for example, a halide electrolyte, which may broaden an electrochemical window of the solid-state electrolyte membrane 13, so that the solid-state electrolyte membrane 13 is compatible with a high-voltage positive electrode. Specifically, a chemical formula of the first electrolyte is, for example, Li₂₊ₙZr₁₋ₙMₙCl_{6-x-y}BrₓI_{y}, where 0<n<0.6, 0≤x≤6, 0≤y≤6, x+y<6, and M is selected from at least one of V, Cr, Mn, Fe, Co, or Ni. Furthermore, M is, for example, Fe, a range of n is 0.01<n<0.5, and specifically, n is, for example, 0.35. By limiting a type of the M element in the first electrolyte and the range of n, the chemical stability and lithium ion conductivity of the first solid-state electrolyte layer 131 may be improved.

Please refer to FIG. 1 to FIG. 2. In an embodiment of the disclosure, when the first solid-state electrolyte layer 131 is prepared, first under an atmosphere of inert gas such as argon, according to the chemical formula of the first electrolyte being Li₂₊ₙZr₁₋ₙMₙCl_{6-x-y}BrₓI_{y}, a Li source, a Zr source, a M source, a Cl source, a Br source, and a I source are mixed uniformly based on stoichiometry, then placed in a ball mill jar for ball milling treatment to obtain a first electrolyte. The Li source is, for example, selected from at least one of LiCl, LiBr, or LiI. The Zr source is, for example, ZrCl₄. The M source is, for example, a chloride of M. The Cl source is, for example, from at least one of the Li source, the Zr source, or the M source. The Br source and the I source are, for example, from the Li source. A ball-to-powder mass ratio is, for example, (1 to 100):1. The ball milling time is, for example, 1h to 72h. A rotation speed is, for example, 100rpm to 1500rpm. After the first electrolyte is obtained, the first solid-state electrolyte layer 131 is prepared by using methods such as powder extrusion molding, wet coating, or electrostatic spraying.

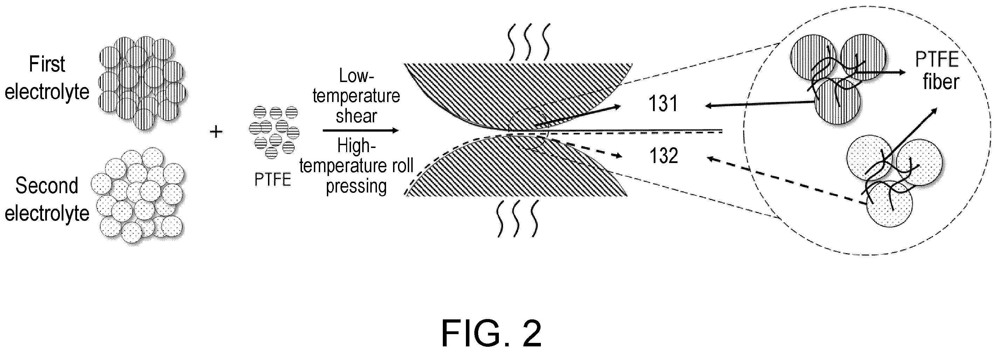

Please refer to FIG. 2. In an embodiment of the disclosure, when powder extrusion molding is used to prepare the first solid-state electrolyte layer 131, first the first electrolyte and the first binder are mixed uniformly through low-temperature shear mixing, and then rapidly heated for high-temperature shear mixing to obtain a mixture material. Next, the mixture material is added to a roll press for high-temperature roll pressing to obtain the first solid-state electrolyte layer 131. The first binder is, for example, selected from at least one of PTFE, ethylene tetrafluoroethylene (ETFE), fluorinated ethylene propylene (FEP), polyfluoroalkoxy (PFA), polychlorotrifluoroethylene (PCTFE), ethylene-chlorotrifluoroethylene copolymer (ECTFE), polyvinylidene fluoride (PVDF), polyvinylidene fluoride-hexafluoropropylene copolymer, or polyvinylidene fluoride-trifluorochloroethylene copolymer. A content of the first electrolyte in the mixture material is, for example, 95wt% to 99.9wt%. A content of the first binder in the mixture material is, for example, 0.1wt% to 5wt%. A temperature of low-temperature shear is, for example, -30°C to 15°C. A temperature of high-temperature shear is, for example, 20°C to 200°C. A temperature of high-temperature roll pressing is, for example, 20°C to 200°C.

Please refer to FIG. 1. In another embodiment of the disclosure, when wet coating or electrostatic spraying is used to prepare the first solid-state electrolyte layer 131, first a first electrolyte, a second binder, and a solvent are mixed uniformly to obtain a mixture component. Next, the mixture component is coated on a substrate through wet coating or electrostatic spraying, and then the substrate coated with the mixture component is subjected to high-temperature drying and peeling to obtain the first solid-state electrolyte layer 131. The second binder is, for example, selected from at least one of PVDF, Carboxymethyl Cellulose (CMC), SBR, polyvinyl pyrrolidone (PVP), polymethyl methacrylate (PMMA), polyacrylonitrile (PAN), polyacrylic acid (PAA), polyurethane, polyvinyl alcohol (PVA), sodium alginate (Alg), ethylene-propylene-diene monomer, polyvinylidene fluoride, fluororubber, β-cyclodextrin (β-CDp), polypropylene emulsion (LA132), PTFE, ETFE, FEP, PFA, PCTFE, ECTFE, polyvinylidene fluoride-hexafluoropropylene copolymer, or vinylidene fluoride-chlorotrifluoroethylene copolymer. The solvent is, for example, selected from at least one of toluene, chlorobenzene, xylene, dimethyl carbonate, N-methylformamide, n-hexane, ethylene glycol dimethyl ether, dibutyl ether, ethanol, 1,2-ethylenediamine, 1,2-ethanedithiol, acetonitrile, tetrahydrofuran, methanol, diisopropyl ether, acetone, hexene, ethyl acetate, benzyl acetate, butyl butyrate, or diisobutyl ketone. A content of the first electrolyte in the mixture component is 30wt% to 90wt%. A content of the second binder in the mixture component is, for example, 0.1wt% to 10wt%. A content of the solvent in the mixture component is, for example, 10wt% to 50wt%. The substrate is, for example, selected from polyethylene glycol terephthalate (PET) film, smooth aluminum foil, or release paper. A temperature of high-temperature drying is, for example, 30°C to 250°C.

Please refer to FIG. 1. In an embodiment of the disclosure, the second solid-state electrolyte layer 132 includes a second electrolyte. The second electrolyte is, for example, a sulfide electrolyte, which may further improve the lithium ion conductivity and electrochemical redox stability of the second solid-state electrolyte layer 132 and the solid-state electrolyte membrane 13. Specifically, a chemical formula of the second electrolyte is, for example, selected from at least one of LiₐP_{1-b}T_{b}S_{c}O_{d}Xₑ or Li_{f}P_{1-g}E_{g}S_{w}O_{g}Q_{z}. In LiₐP_{1-b}T_{b}S_{c}O_{d}Xₑ, 5<a<6, 0<b<1, 1.5<c<5, 0<d<2.5, 4<c+d<5, 1<e<2, T is, for example, selected from at least one of Al, Ga, In, Ti, Sc, As, Sb, Bi, As, V, or Nb, and X is, for example, selected from at least one of Cl, Br, or I. Further, T is, for example, selected from at least one of Sb, In, or Bi, X is, for example, Cl, and a range of b is 0<b<0.1. More specifically, when M is, for example, a +5 valence element, b is, for example, 0.04, and when M is, for example, a +3 valence element, b is, for example, 0.02. By controlling the type of the M element in the second electrolyte, a type of the T element, and the range of b, the cycle performance of the solid-state battery 10 may be improved, thereby extending the service life of the battery.

Please refer to FIG. 1. In an example of the disclosure, when a chemical formula of the second electrolyte is Li_{f}P_{1-g}E_{g}S_{w}O_{g}Q_{z}, where 5<f<10, 0<g<1, 3<w<6, 4<w+g<6, 0<z<2, E is, for example, selected from at least one of Mg, Ca, Sr, Ba, Zn, Cr, Sn, or Pb, and Q is, for example, selected from at least one of Cl, Br, or I. Further, E is, for example, Mg, Q is, for example, Cl, a range of g is 0.01≤g≤0.1, and specifically, g is, for example, 0.02. By controlling a type of the E element in the second electrolyte, a type of the Q element, and the range of g, the cycle performance of the solid-state battery 10 may be improved, thereby extending the service life of the battery.

Please refer to FIG. 1. In an embodiment of the disclosure, when the second solid-state electrolyte layer 132 is prepared, first under an atmosphere of inert gas such as argon, according to the chemical formula of the second electrolyte which is LiₐP_{1-b}T_{b}S_{c}O_{d}Xₑ or Li_{f}P_{1-g}E_{g}S_{w}O_{g}Q_{z}, the Li source, the P source, the T source, the S source, and the X source, or the Li source, the P source, the E source, the S source, and the Q source are mixed uniformly according to stoichiometry. For example, the aforementioned mixture is placed in a ball mill jar for ball milling treatment to obtain precursor powder, and then the precursor powder is subjected to high-temperature annealing and sintering to obtain the second electrolyte. The Li source is, for example, selected from at least one of Li₂S, LiCl, LiBr, or LiI. The P source is, for example, P₂S₅. The T source is, for example, an oxide of T. The S source is, for example, from at least one of the Li source or P source. The X source is, for example, from the Li source. The E source is, for example, an oxide of E. The Q source is, for example, from the Li source. A ball-to-material mass ratio is, for example, (1 to 100):1. The ball milling time is, for example, 1h to 48h. A rotation speed is, for example, 50rpm to 1500rpm. A temperature of sintering is, for example, 400°C to 600°C. The sintering time is, for example, 1h-48h. After the second electrolyte is obtained, the second solid-state electrolyte layer 132 is prepared by using, for example, powder extrusion molding, wet coating, or electrostatic spraying. A process of preparing the second solid-state electrolyte layer 132 by using powder extrusion molding, wet coating, or electrostatic spraying is the same as a process of preparing the first solid-state electrolyte layer 131 by using powder extrusion molding, wet coating, or electrostatic spraying, which is not repeated here.

Please refer to FIG. 1. In an embodiment of the disclosure, when the solid-state electrolyte membrane 13 is prepared, the aforementioned first solid-state electrolyte layer 131 and second solid-state electrolyte layer 132 are subjected to roll pressing and composited into the solid-state electrolyte membrane 13.

Please refer to FIG. 1. In an example of the disclosure, the aforementioned positive electrode 11, solid-state electrolyte membrane 13, and negative electrode 12 are sequentially subjected to processes of stacking, packaging, hot pressing, and cold pressing to assemble into the solid-state battery 10.

Hereinafter, the disclosure is described more specifically by reference to examples, which should not be understood as limiting. Appropriate modifications may be made within the scope consistent with the gist of the disclosure, all of which fall within the technical scope of the disclosure.

### Example 1

### Preparation of first electrolyte

Under argon, 1.35 mol of LiCl, 0.5 mol of LiBr, 0.5 mol of LiI, 0.65 mol of ZrCl₄, and 0.35 mol of FeCl₃ are subjected to high-energy ball milling to prepare an electrolyte material with Li_{2.35}Zr_{0.65}Fe_{0.35}Cl₅Br_{0.5}I_{0.5}.

### Preparation of the second electrolyte

Under argon, 2 mol of Li₂S, 1.5 mol of LiCl, 0.48 mol of P₂S₅, and 0.02 mol of Sb₂O₅ are subjected to high-energy ball milling to prepare precursor powder with Li_{5.5}P_{0.96}Sb_{0.04}S_{4.40}O_{0.10}Cl_{1.5}, and then the precursor powder is sintered at a temperature of 500°C for 10h. After cooling, an electrolyte material with Li_{5.5}P_{0.96}Sb_{0.04}S_{4.40}O_{0.10}Cl_{1.5} is obtained.

### Preparation of first solid-state electrolyte layer

An electrolyte material with Li_{2.35}Zr_{0.65}Fe_{0.35}Cl₅Br_{0.5}I_{0.5} and PTFE are mixed uniformly at a mass ratio of 99:1 and at -20°C. When the temperature is raised to 80°C for mixing to fibrillate PTFE, a mixture of the electrolyte material with Li_{2.35}Zr_{0.65}Fe_{0.35}Cl₅Br_{0.5}I_{0.5} and PTFE is obtained for preparing the first solid-state electrolyte layer. Next, the mixture of the electrolyte material with Li_{2.35}Zr_{0.65}Fe_{0.35}Cl₅Br_{0.5}I_{0.5} and PTFE is extruded into the roll press. At 80°C, by adjusting a gap of the roll press, the electrolyte membrane is roll-pressed to a thickness of 5µm to prepare the first solid-state electrolyte layer.

### Preparation of second solid-state electrolyte layer

An electrolyte material with Li_{5.5}P_{0.96}Sb_{0.04}S_{4.40}O_{0.10}Cl_{1.5} and PTFE are mixed uniformly at a mass ratio of 99:1 and at -20°C. When the temperature is raised to 80°C for mixing to fibrillate PTFE, a mixture of the electrolyte material with Li_{5.5}P_{0.96}Sb_{0.04}S_{4.40}O_{0.10}Cl_{1.5} and PTFE is obtained for preparing the second solid-state electrolyte layer. Next, the mixture of the electrolyte material with Li_{5.5}P_{0.96}Sb_{0.04}S_{4.40}O_{0.10}Cl_{1.5} and PTFE is extruded into the roll press. At 80°C, by adjusting the gap of the roll press, the electrolyte membrane is roll-pressed to a thickness of 5µm to prepare the second solid-state electrolyte layer.

### Preparation of solid-state electrolyte membrane

The first solid-state electrolyte layer and the second solid-state electrolyte layer are roll-pressed and composited into a solid-state electrolyte membrane in the roll press.

### Preparation of positive electrode

The positive electrode active material is LiNi_{0.8}Co_{0.1}Mn_{0.1}O₂. The halide solid electrolyte has a chemical formula of Li_{2.35}Zr_{0.65}Fe_{0.35}Cl₅Br_{0.5}I_{0.5}. The conductive agent includes Super P and VGCF. A mass ratio of Super P and VGCF is for example 1:1. The binder is, for example, PTFE. The positive electrode active material, the halide solid electrolyte, the conductive agent and the binder are mixed uniformly according to a mass ratio of 69:29:1:1. Through dry pressing, the positive electrode is obtained.

### Selection of negative electrode

Metallic lithium is selected as a negative electrode.

### Preparation of battery

The positive electrode, the solid-state electrolyte membrane, and the negative electrode are sequentially subjected to the processes of stacking, packaging, hot pressing, and cold pressing to assemble into a solid-state pouch battery.

### Example 2

A difference between this example and Example 1 lies in that the thickness of the second solid-state electrolyte layer is adjusted to 25µm by adjusting the gap of the roll press.

### Example 3

A difference between this example and Example 1 lies in that the thickness of the second solid-state electrolyte layer is adjusted to 50µm by adjusting the gap of the roll press.

### Example 4

A difference between this example and Example 1 lies in that the thickness of the second solid-state electrolyte layer is adjusted to 150µm by adjusting the gap of the roll press.

### Example 5

A difference between this example and Example 2 lies in that the thickness of the first solid-state electrolyte layer is adjusted to 1µm by adjusting the gap of the roll press.

### Example 6

A difference between this example and Example 2 lies in that the thickness of the first solid-state electrolyte layer is adjusted to 50µm by adjusting the gap of the roll press.

### Example 7

A difference between this example and Example 2 lies in that the thickness of the first solid-state electrolyte layer is adjusted to 100µm by adjusting the gap of the roll press.

### Example 8

A difference between this example and Example 2 lies in that the chemical formula of the first solid-state electrolyte layer is Li_{2.2}Zr_{0.8}Fe_{0.2}Cl₅Br_{0.5}I_{0.5}, and the raw materials are 1.2mol of LiCl, 0.5mol of LiBr, 0.5mol of LiI, 0.8mol of ZrCl₄, and 0.2mol of FeCl₃.

### Example 9

A difference between this example and Example 2 lies in that the chemical formula of the first solid-state electrolyte layer is Li_{2.6}Zr_{0.4}Fe_{0.6}Cl₅Br_{0.5}I_{0.5}, and the raw materials are 1.6mol of LiCl, 0.5mol of LiBr, 0.5mol of LiI, 0.4mol of ZrCl₄, and 0.6mol of FeCl₃.

### Example 10

A difference between this example and Example 2 lies in that the chemical formula of the second solid-state electrolyte layer is Li_{5.5}P_{0.99}Sb_{0.01}S_{4.475}O_{0.025}Cl_{1.5}, and the raw materials are 2mol of Li₂S, 1.5mol of LiCl, 0.495mol of P₂S₅, and 0.005mol of Sb₂O₅.

### Example 11

A difference between this example and Example 2 lies in that the chemical formula of the second solid-state electrolyte layer is Li_{5.5}P_{0.94}Sb_{0.06}S_{4.35}O_{0.15}Cl_{1.5}, and the raw materials are 2mol of Li₂S, 1.5mol of LiCl, 0.47mol of P₂S₅, and 0.03mol of Sb₂O₅.

### Example 12

A difference between this example and Example 2 lies in that the chemical formula of the second solid-state electrolyte layer is Li_{5.5}P_{0.9}Sb_{0.1}S_{4.25}O_{0.25}Cl_{1.5}, and the raw materials are 2mol of Li₂S, 1.5mol of LiCl, 0.45mol of P₂S₅, and 0.05mol of Sb₂O₅.

### Example 13

A difference between this example and Example 2 lies in that the chemical formula of the second solid-state electrolyte layer is Li_{5.1}P_{0.96}Sb_{0.04}S₄O_{0.10}Cl_{1.9}, and the raw materials are 1.6mol of Li₂S, 1.9mol of LiCl, 0.48mol of P₂S₅, and 0.02mol of Sb₂O₅.

### Example 14

A difference between this example and Example 2 lies in that the chemical formula of the second solid-state electrolyte layer is Li_{5.9}P_{0.96}Sb_{0.04}S_{4.80}O_{0.10}Cl_{1.1}, and the raw materials are 2.4mol of Li₂S, 1.1mol of LiCl, 0.48mol of P₂S₅, and 0.02mol of Sb₂O₅.

### Example 15

A difference between this example and Example 2 lies in that the chemical formula of the second solid-state electrolyte layer is Li_{5.5}P_{0.96}Sb_{0.04}S_{4.40}O_{0.10}Cl_{1.4}Br_{0.1}, and the raw materials are 2mol of Li₂S, 1.4mol of LiCl, 0.1mol of LiBr, 0.48mol of P₂S₅, and 0.02mol of Sb₂O₅.

### Example 16

A difference between this example and Example 2 lies in that the chemical formula of the second solid-state electrolyte layer is Li_{5.5}P_{0.96}Sb_{0.04}S_{4.40}O_{0.10}Cl_{1.3}Br_{0.1}I_{0.1}, and the raw materials are 2mol of Li₂S, 1.3mol of LiCl, 0.1mol of LiBr, 0.1mol of LiI, 0.48mol of P₂S₅, and 0.02mol of Sb₂O₅.

### Example 17

A difference between this example and Example 2 lies in that the chemical formula of the second solid-state electrolyte layer is Li_{5.52}P_{0.99}In_{0.01}S_{4.485}O_{0.015}Cl_{1.5}, and the raw materials are 2.01mol of Li₂S, 1.5mol of LiCl, 0.495mol of P₂S₅, and 0.005mol of In₂O₃.

### Example 18

A difference between this example and Example 2 lies in that the chemical formula of the second solid-state electrolyte layer is Li_{5.54}P_{0.98}In_{0.02}S_{4.47}O_{0.03}Cl_{1.5}, and the raw materials are 2.02mol of Li₂S, 1.5mol of LiCl, 0.49mol of P₂S₅, and 0.01mol of In₂O₃.

### Example 19

A difference between this example and Example 2 lies in that the chemical formula of the second solid-state electrolyte layer is Li_{5.62}P_{0.94}In_{0.06}S_{4.41}O_{0.09}Cl_{1.5}, and the raw materials are 2.06mol of Li₂S, 1.5mol of LiCl, 0.47mol of P₂S₅, and 0.03mol of In₂O₃.

### Example 20

A difference between this example and Example 2 lies in that the chemical formula of the second solid-state electrolyte layer is Li_{5.7}P_{0.9}In_{0.1}S_{4.35}O_{0.15}Cl_{1.5}, and the raw materials are 2.1mol of Li₂S, 1.5mol of LiCl, 0.45mol of P₂S₅, and 0.05mol of In₂O₃.

### Example 21

A difference between this example and Example 2 lies in that the chemical formula of the second solid-state electrolyte layer is Li_{5.14}P_{0.98}In_{0.02}S_{4.07}O_{0.03}Cl_{1.9}, and the raw materials are 1.62mol of Li₂S, 1.9mol of LiCl, 0.49mol of P₂S₅, and 0.01mol of In₂O₃.

### Example 22

A difference between this example and Example 2 lies in that the chemical formula of the second solid-state electrolyte layer is Li_{5.94}P_{0.98}In_{0.02}S_{4.87}O_{0.03}Cl_{1.1}, and the raw materials are 2.42mol of Li₂S, 1.1mol of LiCl, 0.49mol of P₂S₅, and 0.01mol of In₂O₃.

### Example 23

A difference between this example and Example 2 lies in that the chemical formula of the second solid-state electrolyte layer is Li_{5.54}P_{0.98}In_{0.02}S_{4.47}O_{0.03}Cl_{1.4}Br_{0.1}, and the raw materials are 2.02mol of Li₂S, 1.4mol of LiCl, 0.1mol of LiBr, 0.49mol of P₂S₅, and 0.01mol of In₂O₃.

### Example 24

A difference between this example and Example 2 lies in that the chemical formula of the second solid-state electrolyte layer is Li_{5.54}P_{0.98}In_{0.02}S_{4.47}O_{0.03}Cl_{1.3}Br_{0.1}I_{0.1}, and the raw materials are 2.02mol of Li₂S, 1.3mol of LiCl, 0.1mol of LiBr, 0.1mol of LiI, 0.49mol of P₂S₅, and 0.01mol of In₂O₃.

### Example 25

A difference between this example and Example 2 lies in that the chemical formula of the second solid-state electrolyte layer is Li_{5.52}P_{0.99}Bi_{0.01}S_{4.485}O_{0.015}Cl_{1.5}, and the raw materials are 2.01mol of Li₂S, 1.5mol of LiCl, 0.495mol of P₂S₅, and 0.005mol of Bi₂O₃.

### Example 26

A difference between this example and Example 2 lies in that the chemical formula of the second solid-state electrolyte layer is Li_{5.54}P_{0.98}Bi_{0.02}S_{4.47}O_{0.03}Cl_{1.5}, and the raw materials are 2.02mol of Li₂S, 1.5mol of LiCl, 0.49mol of P₂S₅, and 0.01mol of Bi₂O₃.

### Example 27

A difference between this example and Example 2 lies in that the chemical formula of the second solid-state electrolyte layer is Li_{5.62}P_{0.94}Bi_{0.06}S_{4.41}O_{0.09}Cl_{1.5}, and the raw materials are 2.06mol of Li₂S, 1.5mol of LiCl, 0.47mol of P₂S₅, and 0.03mol of Bi₂O₃.

### Example 28

A difference between this example and Example 2 lies in that the chemical formula of the second solid-state electrolyte layer is Li_{5.7}P_{0.9}Bi_{0.1}S_{4.35}O_{0.15}Cl_{1.5}, and the raw materials are 2.1mol of Li₂S, 1.5mol of LiCl, 0.45mol of P₂S₅, and 0.05mol of Bi₂O₃.

### Example 29

A difference between this example and Example 2 lies in that the chemical formula of the second solid-state electrolyte layer is Li_{5.14}P_{0.98}Bi_{0.02}S_{4.07}O_{0.03}Cl_{1.9}, and the raw materials are 1.62mol of Li₂S, 1.9mol of LiCl, 0.49mol of P₂S₅, and 0.01mol of Bi₂O₃.

### Example 30

A difference between this example and Example 2 lies in that the chemical formula of the second solid-state electrolyte layer is Li_{5.94}P_{0.98}Bi_{0.02}S_{4.87}O_{0.03}Cl_{1.1}, and the raw materials are 2.42mol of Li₂S, 1.1mol of LiCl, 0.49mol of P₂S₅, and 0.01mol of Bi₂O₃.

### Example 31

A difference between this example and Example 2 lies in that the chemical formula of the second solid-state electrolyte layer is Li_{5.54}P_{0.98}Bi_{0.02}S_{4.47}O_{0.03}Cl_{1.4}Br_{0.1}, and the raw materials are 2.02mol of Li₂S, 1.4mol of LiCl, 0.1mol of LiBr, 0.49mol of P₂S₅, and 0.01mol of Bi₂O₃.

### Example 32

A difference between this example and Example 2 lies in that the chemical formula of the second solid-state electrolyte layer is Li_{5.54}P_{0.98}Bi_{0.02}S_{4.47}O_{0.03}Cl_{1.3}Br_{0.1}I_{0.1}, and the raw materials are 2.02mol of Li₂S, 1.3mol of LiCl, 0.1mol of LiBr, 0.1mol of LiI, 0.49mol of P₂S₅, and 0.01mol of Bi₂O₃.

### Example 33

A difference between this example and Example 2 lies in that the chemical formula of the second solid-state electrolyte layer is Li_{5.53}P_{0.99}Mg_{0.01}S_{4.49}O_{0.01}Cl_{1.5}, and the raw materials are 2.015mol of Li₂S, 1.5mol of LiCl, 0.495mol of P₂S₅, and 0.01mol of MgO.

### Example 34

A difference between this example and Example 2 lies in that the chemical formula of the second solid-state electrolyte layer is Li_{5.56}P_{0.98}Mg_{0.02}S_{4.48}O_{0.02}Cl_{1.5}, and the raw materials are 2.03mol of Li₂S, 1.5mol of LiCl, 0.49mol of P₂S₅, and 0.02mol of MgO.

### Example 35

A difference between this example and Example 2 lies in that the chemical formula of the second solid-state electrolyte layer is Li_{5.68}P_{0.94}Mg_{0.06}S_{4.44}O_{0.06}Cl_{1.5}, and the raw materials are 2.09mol of Li₂S, 1.5mol of LiCl, 0.47mol of P₂S₅, and 0.06mol of MgO.

### Example 36

A difference between this example and Example 2 lies in that the chemical formula of the second solid-state electrolyte layer is Li_{5.8}P_{0.9}Mg_{0.1}S_{4.48}O_{0.1}Cl_{1.5}, and the raw materials are 2.15mol of Li₂S, 1.5mol of LiCl, 0.45mol of P₂S₅, and 0.1mol of MgO.

### Example 37

A difference between this example and Example 2 lies in that the chemical formula of the second solid-state electrolyte layer is Li_{5.16}P_{0.98}Mg_{0.02}S_{4.08}O_{0.02}Cl_{1.9}, and the raw materials are 1.83mol of Li₂S, 1.9mol of LiCl, 0.49mol of P₂S₅, and 0.02mol of MgO.

### Example 38

A difference between this example and Example 2 lies in that the chemical formula of the second solid-state electrolyte layer is Li_{6.96}P_{0.98}Mg_{0.02}S_{5.88}O_{0.02}Cl_{0.1}, and the raw materials are 3.43mol of Li₂S, 0.1mol of LiCl, 0.49mol of P₂S₅, and 0.02mol of MgO.

### Example 39

A difference between this example and Example 2 lies in that the chemical formula of the second solid-state electrolyte layer is Li_{5.56}P_{0.98}Mg_{0.02}S_{4.48}O_{0.02}Cl_{1.4}Br_{0.1}, and the raw materials are 2.03mol of Li₂S, 1.4mol of LiCl, 0.1mol of LiBr, 0.49mol of P₂S₅, and 0.02mol of MgO.

### Example 40

A difference between this example and Example 2 lies in that the chemical formula of the second solid-state electrolyte layer is Li_{5.56}P_{0.98}Mg_{0.02}S_{4.48}O_{0.02}Cl_{1.3}Br_{0.1}I_{0.1}, and the raw materials are 2.03mol of Li₂S, 1.3mol of LiCl, 0.1mol of LiBr, 0.1mol of LiI, 0.49mol of P₂S₅, and 0.02mol of MgO.

### Example 41

A difference between this example and Example 2 lies in that ETFE is selected as the first binder during the preparation process of the first solid-state electrolyte layer and the second solid-state electrolyte layer.

### Example 42

A difference between this example and Example 2 lies in that PCTFE is selected as the first binder during the preparation process of the first solid-state electrolyte layer and the second solid-state electrolyte layer.

### Example 43

A difference between this example and Example 2 lies in that the first solid-state electrolyte layer and the second solid-state electrolyte layer are prepared by wet coating.

### Preparation of first solid-state electrolyte layer

Specifically, an electrolyte material with Li_{2.35}Zr_{0.65}Fe_{0.35}Cl₅Br_{0.5}I_{0.5}, a SBR binder, and a xylene solvent are mixed uniformly according to a mass ratio of 49:1:50 to obtain a mixed component. The mixed component is coated on smooth aluminum foil by using a 5µm film applicator, and vacuum dried at 80°C to prepare a thickness of 5µm of a first solid-state electrolyte layer with Li_{2.35}Zr_{0.65}Fe_{0.35}Cl₅Br_{0.5}I_{0.5}.

### Preparation of second solid-state electrolyte layer

An electrolyte material with Li_{5.5}P_{0.96}Sb_{0.04}S_{4.40}O_{0.10}Cl_{1.5}, a SBR binder, and a xylene solvent are mixed uniformly according to a mass ratio of 49:1:50 to obtain a mixed component. The mixed component is coated on smooth aluminum foil by using a 25µm film applicator, and vacuum dried at 80°C to prepare a thickness of 25µm of a second solid-state electrolyte layer with Li_{5.5}P_{0.96}Sb_{0.04}S_{4.40}O_{0.10}Cl_{1.5}.

### Example 44

A difference between this example and Example 43 lies in that PVDF is selected as the second binder during the preparation process of the first solid-state electrolyte layer and the second solid-state electrolyte layer.

### Example 45

A difference between this example and Example 43 lies in that PAA is selected as the second binder during the preparation process of the first solid-state electrolyte layer and the second solid-state electrolyte layer.

### Comparative Example 1

A difference between this comparative example and Example 2 lies in that the chemical formula of the second solid-state electrolyte layer is Li_{5.5}PS_{4.5}Cl_{1.5}, and the raw materials are 2mol of Li₂S, 1.5mol of LiCl, and 0.5mol of P₂S₅.

### Comparative Example 2

A difference between this comparative example and Example 2 lies in that the solid-state electrolyte membrane only includes the first solid-state electrolyte layer.

### Comparative Example 3

A difference between this comparative example and Example 2 lies in that the solid-state electrolyte membrane only includes the second solid-state electrolyte layer.

### Comparative Example 4

A difference between this comparative example and Example 2 lies in that by adjusting the gap of the roll press, the thickness of the first solid-state electrolyte layer is adjusted to 5µm, and the thickness of the second solid-state electrolyte layer is adjusted to 1µm.

The composition and parameters of the first solid-state electrolyte layer and the second solid-state electrolyte layer in each example and comparative example are shown in Table 1.

**Table 1: Composition table of the first solid-state electrolyte layer and the second solid-state electrolyte layer in Examples 1 to 45 and Comparative Examples 1 to 4**

| Group | First solid-state electrolyte layer | | | Second solid-state electrolyte layer | | |
|---|---|---|---|---|---|---|
| | Chemical formula | Ionic conductivity (S/cm) | Thickness (µm) | Chemical formula | Ionic conductivity (S/cm) | Thickness (µm) |
| Example 1 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.5} | 6.35×10⁻³ | 5 |
| Example 2 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.5} | 6.35×10⁻³ | 25 |
| Example 3 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.5} | 6.35×10⁻³ | 50 |
| Example 4 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.5} | 6.35×10⁻³ | 150 |
| Example 5 | Li_{2.35}Zr_{0.65}Fe_{0.35}Cl₅Br_{0 .5}I_{0.5} | 1.35×10⁻³ | 1 | Li_{5.5}P_{0.96}Sb_{0.04}S_{4.40}O_{0.10}Cl_{1.5} | 6.35×10⁻³ | 25 |
| Example 6 | Li_{2.35}Zr_{0.65}Fe_{0.35}Cl₅Br_{0 .5}I_{0.5} | 1.35×10⁻³ | 50 | Li_{5.5}P_{0.96}Sb_{0.04}S_{4.40}O_{0.10}Cl_{1.5} | 6.35×10⁻³ | 25 |
| Example 7 | Li_{2.35}Zr_{0.65}Fe_{0.35}Cl₅Br_{0 .5}I_{0.5} | 1.35×10⁻³ | 100 | Li_{5.5}P_{0.96}Sb_{0.04}S_{4.40}O_{0.10}Cl_{1.5} | 6.35×10⁻³ | 25 |
| Example 8 | Li_{2.2}Zr_{0.8}Fe_{0.2}Cl₅Br_{0.5}I _{0.5} | 8.32×10⁻⁴ | 5 | Li_{5.5}P_{0.96}Sb_{0.04}S_{4.40}O_{0.10}Cl_{1.5} | 6.35×10⁻³ | 25 |
| Example 9 | Li_{2.6}Zr_{0.4}Fe_{0.6}Cl₅Br_{0.5}I _{0.5} | 3.24×10⁻⁴ | 5 | Li_{5.5}P_{0.96}Sb_{0.04}S_{4.40}O_{0.10}Cl_{1.5} | 6.35×10⁻³ | 25 |
| Example 10 | Li_{2.35}Zr_{0.65}Fe_{0.35}Cl₅Br_{0 .5}I_{0.5} | 1.35×10⁻³ | 5 | Li_{5.5}P_{0.99}Sb_{0.01}S_{4.475}O_{0.025}Cl_{1.5} | 6.92×10⁻³ | 25 |
| Example 11 | Li_{2.35}Zr_{0.65}Fe_{0.35}Cl₅Br_{0 .5}I_{0.5} | 1.35×10⁻³ | 5 | Li_{5.5}P_{0.94}Sb_{0.06}S_{4.35}O_{0.15}Cl_{1.5} | 5.21×10⁻³ | 25 |
| Example 12 | Li_{2.35}Zr_{0.65}Fe_{0.35}Cl₅Br_{0 .5}I_{0.5} | 1.35×10⁻³ | 5 | Li_{5.5}P_{0.9}Sb_{0.1}S_{4.25}O_{0.25}Cl_{1.5} | 2.66×10⁻³ | 25 |
| Example 13 | Li_{2.35}Zr_{0.65}Fe_{0.35}Cl₅Br_{0 .5}I_{0.5} | 1.35×10⁻³ | 5 | Li_{5.1}P_{0.96}Sb_{0.04}S₄O_{0.10}Cl_{1.9} | 1.06×10⁻³ | 25 |
| Example 14 | Li_{2.35}Zr_{0.65}Fe_{0.35}Cl₅Br_{0 .5}I_{0.5} | 1.35×10⁻³ | 5 | Li_{5.9}P_{0.96}Sb_{0.04}S_{4.80}O_{0.10}Cl_{1.1} | 1.16×10⁻³ | 25 |
| Example 15 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.4}Br_{0. 1} | 5.61×10⁻³ | 25 |
| Example 16 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.3}Br_{0. 1}I_{0.1} | 5.16×10⁻³ | 25 |
| Example 17 | Li_{2.35}Zr_{0.65}Fe_{0.35}Cl₅Br_{0 .5}I_{0.5} | 1.35×10⁻³ | 5 | Li_{5.52}P_{0.99}In_{0.01}S_{4.485}O_{0.015}Cl_{1.5} | 7.01×10⁻³ | 25 |
| Example 18 | Li_{2.35}Zr_{0.65}Fe_{0.35}Cl₅Br_{0 .5}I_{0.5} | 1.35×10⁻³ | 5 | Li_{5.54}P_{0.98}In_{0.02}S_{4.47}O_{0.03}Cl_{1.5} | 6.44×10⁻³ | 25 |
| Example 19 | Li_{2.35}Zr_{0.65}Fe_{0.35}Cl₅Br_{0 .5}I_{0.5} | 1.35×10⁻³ | 5 | Li_{5.62}P_{0.94}In_{0.06}S_{4.41}O_{0.09}Cl_{1.5} | 4.57×10⁻³ | 25 |
| Example 20 | Li_{2.35}Zr_{0.65}Fe_{0.35}Cl₅Br_{0 .5}I_{0.5} | 1.35×10⁻³ | 5 | Li_{5.7}P_{0.9}In_{0.1}S_{4.35}O_{0.15}Cl_{1.5} | 2.76×10⁻³ | 25 |
| Example 21 | Li_{2.35}Zr_{0.65}Fe_{0.35}Cl₅Br_{0 .5}I_{0.5} | 1.35×10⁻³ | 5 | Li_{5.14}P_{0.98}In_{0.02}S_{4.07}O_{0.03}Cl_{1.9} | 1.16×10⁻³ | 25 |
| Example 22 | Li_{2.35}Zr_{0.65}Fe_{0.35}Cl₅Br_{0 .5}I_{0.5} | 1.35×10⁻³ | 5 | Li_{5.94}P_{0.98}In_{0.02}S_{4.87}O_{0.03}Cl_{1.1} | 1.25×1 0⁻³ | 25 |
| Example 23 | Li_{2.35}Zr_{0.65}Fe_{0.35}Cl₅Br_{0 .5}I_{0.5} | 1.35×10⁻³ | 5 | Li_{5.54}P_{0.98}In_{0.02}S_{4.47}O_{0.03}Cl_{1.4}Br_{0 .1} | 5.71×10⁻³ | 25 |
| Example 24 | Li_{2.35}Zr_{0.65}Fe_{0.35}Cl₅Br_{0 .5}I_{0.5} | 1.35×10⁻³ | 5 | Li_{5.54}P_{0.98}In_{0.02}S_{4.47}O_{0.03}Cl_{1.3}Br_{0 1}I_{0.1} | 5.25×10⁻³ | 25 |
| Example 25 | Li_{2.35}Zr_{0.65}Fe_{0.35}Cl₅Br_{0 .5}I_{0.5} | 1.35×10⁻³ | 5 | Li_{5.52}P_{0.99}Bi_{0.01}S_{4.485}O_{0.015}Cl_{1.5} | 7.25×10⁻³ | 25 |
| Example 26 | Li_{2.35}Zr_{0.65}Fe_{0.35}Cl₅Br_{0 .5}I_{0.5} | 1.35×10⁻³ | 5 | Li_{5.54}P_{0.98}Bi_{0.02}S_{4.47}O_{0.03}Cl_{1.5} | 6.68×10⁻³ | 25 |
| Example 27 | Li_{2.35}Zr_{0.65}Fe_{0.35}Cl₅Br_{0 .5}I_{0.5} | 1.35×10⁻³ | 5 | Li_{5.62}P_{0.94}Bi_{0.06}S_{4.41}O_{0.09}Cl_{1.5} | 4.81×10⁻³ | 25 |
| Example 28 | Li_{2.35}Zr_{0.65}Fe_{0.35}Cl₅Br_{0 .5}I_{0.5} | 1.35×10⁻³ | 5 | Li_{5.7}P_{0.9}Bi_{0.1}S_{4.35}O_{0.15}Cl_{1.5} | 3×10⁻³ | 25 |
| Example 29 | Li_{2.35}Zr_{0.65}Fe_{0.35}Cl₅Br_{0 .5}I_{0.5} | 1.35×10⁻³ | 5 | Li_{5.14}P_{0.98}Bi_{0.02}S_{4.07}O_{0.03}Cl_{1.9} | 1.25×10⁻³ | 25 |
| Example 30 | Li_{2.35}Zr_{0.65}Fe_{0.35}Cl₅Br_{0 .5}I_{0.5} | 1.35×10⁻³ | 5 | Li_{5.94}P_{0.98}Bi_{0.02}S_{4.87}O_{0.03}Cl_{1.1} | 1.3×10⁻³ | 25 |
| Example 31 | Li_{2.35}Zr_{0.65}Fe_{0.35}Cl₅Br_{0 .5}I_{0.5} | 1.35×10⁻³ | 5 | Li_{5.54}P_{0.98}Bi_{0.02}S_{4.47}O_{0.03}Cl_{1.4}Br_{0 .1} | 5.95×10⁻³ | 25 |
| Example 32 | Li_{2.35}Zr_{0.65}Fe_{0.35}Cl₅Br_{0 .5}I_{0.5} | 1.35×10⁻³ | 5 | Li_{5.54}P_{0.98}Bi_{0.02}S_{4.47}O_{0.03}Cl_{1.3}Br_{0 1}I_{0.1} | 5.49×10⁻³ | 25 |
| Example 33 | Li_{2.35}Zr_{0.65}Fe_{0.35}Cl₅Br_{0 .5}I_{0.5} | 1.35×10⁻³ | 5 | Li_{5.53}P_{0.99}Mg_{0.01}S_{4.49}O_{0.01}Cl_{1.5} | 7.81×10⁻³ | 25 |
| Example 34 | Li_{2.35}Zr_{0.65}Fe_{0.35}Cl₅Br_{0 .5}I_{0.5} | 1.35×10⁻³ | 5 | Li_{5.56}P_{0.98}Mg_{0.02}S_{4.48}O_{0.02}Cl_{1.5} | 7.26×10⁻³ | 25 |
| Example 35 | Li_{2.35}Zr_{0.65}Fe_{0.35}Cl₅Br_{0 .5}I_{0.5} | 1.35×10⁻³ | 5 | Li_{5.68}P_{0.94}Mg_{0.06}S_{4.44}O_{0.06}Cl_{1.5} | 5.13×10⁻³ | 25 |
| Example 36 | Li_{2.35}Zr_{0.65}Fe_{0.35}Cl₅Br_{0 .5}I_{0.5} | 1.35×10⁻³ | 5 | Li_{5.8}P_{0.9}Mg_{0.1}S_{4.48}O_{0.1}Cl_{1.5} | 3.13×10⁻³ | 25 |
| Example 37 | Li_{2.35}Zr_{0.65}Fe_{0.35}Cl₅Br_{0 .5}I_{0.5} | 1.35×10⁻³ | 5 | Li_{5.16}P_{0.98}Mg_{0.02}S_{4.08}O_{0.02}Cl_{1.9} | 1.12×10⁻³ | 25 |
| Example 38 | Li_{2.35}Zr_{0.65}Fe_{0.35}Cl₅Br_{0 .5}I_{0.5} | 1.35×10⁻³ | 5 | Li_{6.96}P_{0.98}Mg_{0.02}S_{5.88}O_{0.02}Cl_{0.1} | 1.01×10⁻³ | 25 |
| Example 39 | Li_{2.35}Zr_{0.65}Fe_{0.35}Cl₅Br_{0 .5}I_{0.5} | 1.35×10⁻³ | 5 | Li_{5.56}P_{0.98}Mg_{0.02}S_{4.48}O_{0.02}Cl_{1.4}B r_{0.1} | 6.38×10⁻³ | 25 |
| Example 40 | Li_{2.35}Zr_{0.65}Fe_{0.35}Cl₅Br_{0 .5}I_{0.5} | 1.35×10⁻³ | 5 | Li_{5.56}P_{0.98}Mg_{0.02}S_{4.48}O_{0.02}Cl_{1.3}B r_{0.1}I_{0.1} | 5.87×10⁻³ | 25 |
| Example 41 | Li_{2.35}Zr_{0.65}Fe_{0.35}Cl₅Br_{0 .5}I_{0.5} | 1.25×10⁻³ | 5 | Li_{5.5}P_{0.96}Sb_{0.04}S_{4.40}O_{0.10}Cl_{1.5} | 6.12×10⁻³ | 25 |
| Example 42 | Li_{2.35}Zr_{0.65}Fe_{0.35}Cl₅Br_{0 .5}I_{0.5} | 1.16×10⁻³ | 5 | Li_{5.5}P_{0.96}Sb_{0.04}S_{4.40}O_{0.10}Cl_{1.5} | 5.83×10⁻³ | 25 |
| Example 43 | Li_{2.35}Zr_{0.65}Fe_{0.35}Cl₅Br_{0 .5}I_{0.5} | 0.65×10⁻³ | 5 | Li_{5.5}P_{0.96}Sb_{0.04}S_{4.40}O_{0.10}Cl_{1.5} | 4.32×10⁻³ | 25 |
| Example 44 | Li_{2.35}Zr_{0.65}Fe_{0.35}Cl₅Br_{0 .5}I_{0.5} | 0.76×10⁻³ | 5 | Li_{5.5}P_{0.96}Sb_{0.04}S_{4.40}O_{0.10}Cl_{1.5} | 4.56×10⁻³ | 25 |
| Example 45 | Li_{2.35}Zr_{0.65}Fe_{0.35}Cl₅Br_{0 .5}I_{0.5} | 0.88×10⁻³ | 5 | Li_{5.5}P_{0.96}Sb_{0.04}S_{4.40}O_{0.10}Cl_{1.5} | 4.85×10⁻³ | 25 |
| Comparati ve Example 1 | Li_{2.35}Zr_{0.65}Fe_{0.35}Cl₅Br_{0 .5}I_{0.5} | 1.35×10⁻³ | 5 | Li_{5.5}PS_{4.5}Cl_{1.5} | 9.12×10⁻³ | 25 |
| Comparati ve Example 2 | Li_{2.35}Zr_{0.65}Fe_{0.35}Cl₅Br_{0 .5}I_{0.5} | 1.35×10⁻³ | 5 | | | |
| Comparati ve Example 3 | | | | Li_{5.5}P_{0.96}Sb_{0.04}S_{4.40}O_{0.10}Cl_{1.5} | 6.35×10⁻³ | 25 |
| Comparati ve Example 4 | Li_{2.35}Zr_{0.65}Fe_{0.35}Cl₅Br_{0 .5}I_{0.5} | 1.35×10⁻³ | 5 | Li_{5.5}P_{0.96}Sb_{0.04}S_{4.40}O_{0.10}Cl_{1.5} | 6.35×10⁻³ | 1 |

In the disclosure, performance tests are conducted on solid-state batteries prepared by using different solid-state electrolyte membranes in Examples 1 to 45 and Comparative Examples 1 to 4.

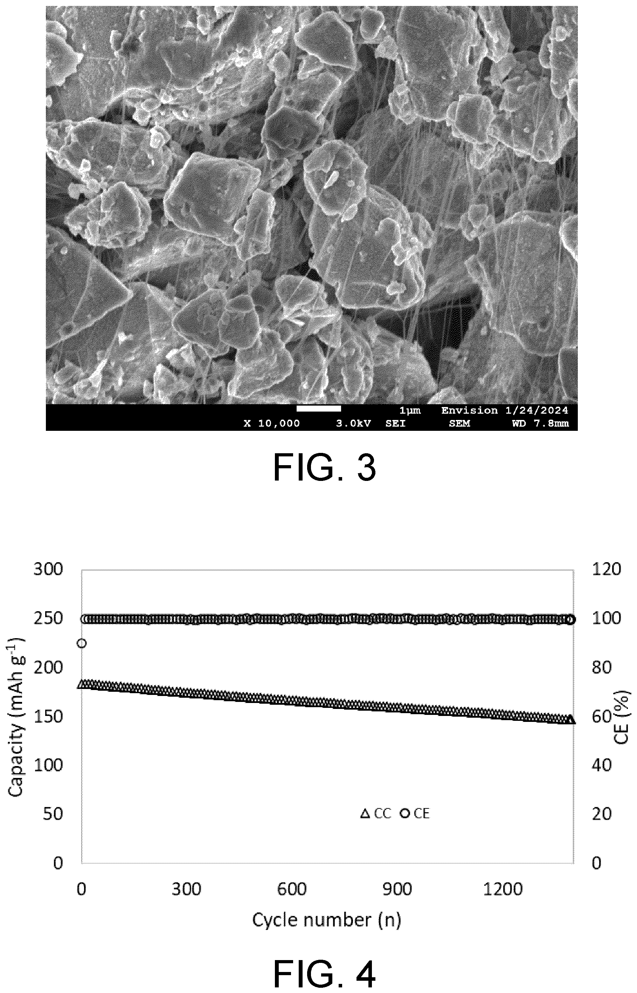

Please refer to FIG. 3. In an embodiment of the disclosure, for example, the morphology of the solid-state electrolyte membrane in Example 2 is characterized through scanning electron microscopy. The scanning electron microscope magnifies, for example, 10000 times. As indicated by FIG. 3, the first solid-state electrolyte layer and the second solid-state electrolyte layer prepared by powder extrusion molding have good self-supporting performance and may stably exist between the positive electrode and the negative electrode, thereby facilitating better performance of the solid-state electrolyte membrane.

Please refer to FIG. 4. In an embodiment of the disclosure, for example, room temperature cycle performance testing is conducted on the solid-state battery in Example 3. Specifically, at 25°C, the solid-state battery is subjected to cyclic charge and discharge at a charge/discharge rate of 1C/1C within a specified voltage range of 2.5V-4.3V to obtain capacity (CC) and coulombic efficiency (CE) under different cycle numbers. As indicated by FIG. 4, with the increase of cycle number, the decay trend of the capacity of the battery is relatively gentle, and the CE of the battery has no fluctuation and is stable at around 100%, which indicates that the battery has good cycle performance.

Please refer to Table 2. In an embodiment of the disclosure, for example, room temperature cycle stability testing is conducted on the solid-state batteries in Examples 1 to 45 and Comparative Examples 1 to 4. Specifically, at 25°C, the solid-state batteries are subjected to cyclic charge and discharge at a charge/discharge rate of 1C/1C within a specified voltage range of 2.5V-4.3 V. When the capacity of the battery reaches 80% sate of health (SOH) of the first cycle capacity, the test is terminated, and the room-temperature cycle number of the battery is recorded. The recorded results are shown in Table 2.

**Table 2: Test results of solid-state batteries in Examples 1 to 45 and Comparative Examples 1 to 4**

| Group | Room-temperature cycle number (80% SOH) |
|---|---|
| Example 1 | 723 |
| Example 2 | 1394 |
| Example 3 | 1221 |
| Example 4 | 1073 |
| Example 5 | 1025 |
| Example 6 | 1134 |
| Example 7 | 1037 |
| Example 8 | 985 |
| Example 9 | 953 |
| Example 10 | 657 |
| Example 11 | 1351 |
| Example 12 | 1226 |
| Example 13 | 958 |
| Example 14 | 967 |
| Example 15 | 1346 |
| Example 16 | 1312 |
| Example 17 | 653 |
| Example 18 | 1369 |
| Example 19 | 1273 |
| Example 20 | 1221 |
| Example 21 | 936 |
| Example 22 | 945 |
| Example 23 | 1307 |
| Example 24 | 1269 |
| Example 25 | 646 |
| Example 26 | 1351 |
| Example 27 | 1255 |
| Example 28 | 1203 |
| Example 29 | 940 |
| Example 30 | 949 |
| Example 31 | 1289 |
| Example 32 | 1251 |
| Example 33 | 645 |
| Example 34 | 1340 |
| Example 35 | 1244 |
| Example 36 | 1192 |
| Example 37 | 904 |
| Example 38 | 877 |
| Example 39 | 1278 |
| Example 40 | 1240 |
| Example 41 | 1264 |
| Example 42 | 1201 |
| Example 43 | 1053 |
| Example 44 | 1089 |
| Example 45 | 1134 |
| Comparative Example 1 | 1 (short circuit) |
| Comparative Example 2 | 13 (short circuit) |
| Comparative Example 3 | 493 |
| Comparative Example 4 | 64 (short circuit) |

Please refer to Table 1 and Table 2. Comparing Example 2, Comparative Example 2, and Comparative Example 3, it may be indicated that if the first solid-state electrolyte layer is used alone as the solid-state electrolyte membrane, the battery quickly experiences a short circuit with almost no cycle performance. If the second solid-state electrolyte layer is used alone as the solid-state electrolyte membrane, the room-temperature cycle number of the battery is only 493. However, if the first solid-state electrolyte layer and the second solid-state electrolyte layer are combined as the solid-state electrolyte membrane, the room-temperature cycle number of the battery increases to 1394, which indicates that in the solid-state electrolyte membrane formed by laminating the first solid-state electrolyte layer and the second solid-state electrolyte layer, the first electrolyte of the first solid-state electrolyte layer may match the positive electrode, and the second electrolyte of the second solid-state electrolyte layer may provide high lithium ion conductivity and good electrochemical redox stability, thereby improving the cycle performance of the battery.

Please refer to Table 1 and Table 2. Comparing Examples 1 to 4 and Comparative Example 4, it may be indicated that as the thickness of the second solid-state electrolyte layer increases from 5µm to 150µm, the room-temperature cycle number of the battery first increases gradually and then decreases gradually. That is, the cycle performance of the battery shows a trend of first improving and then declining. Moreover, when the thickness of the second solid-state electrolyte layer is reduced to 1µm, a short circuit of the battery occurs. Therefore, by controlling the thickness of the second solid-state electrolyte layer, the cycle performance of the battery may be improved.

Please refer to Table 1 and Table 2. Comparing Example 2 and Examples 5 to 7, it may be indicated that as the thickness of the first solid-state electrolyte layer increases from 1µm to 100µm, the room-temperature cycle number of the battery first increases gradually and then decreases gradually. That is, the cycle performance of the battery shows a trend of first improving and then declining. Therefore, by controlling the thickness of the first electrolyte layer, the cycle performance of the battery may be improved.

Please refer to Table 1 and Table 2. Comparing Example 2 and Examples 8 to 9, it may be indicated that with an increase of a doping amount of Fe element of the first solid-state electrolyte layer, the ionic conductivity of the first solid-state electrolyte layer first increases and then decreases, while the room-temperature cycle number of turns of the battery first increases gradually and then decreases gradually. That is, the cycle performance of the battery shows a trend of first improving and then declining. Therefore, in the first solid-state electrolyte layer, by controlling a doping amount of M element in the first electrolyte, the cycle performance of the battery may be improved.

Please refer to Table 1 and Table 2. Comparing Example 2 and Examples 10 to 12, it may be indicated that with an increase of a doping amount of Sb element of the second solid-state electrolyte layer, the ionic conductivity of the second solid-state electrolyte layer gradually decreases, and the room-temperature cycle number of the battery first increases gradually and then decreases gradually. That is, the cycle performance of the battery shows a trend of first improving and then declining. Please refer to Table 1 and Table 2. Comparing Examples 17 to 20, it may be indicated that with an increase of a doping amount of In element in the second solid-state electrolyte layer, the ionic conductivity of the second solid-state electrolyte layer gradually decreases, and the room-temperature cycle number of the battery first increases gradually and then decreases gradually. That is, the cycle performance of the battery shows a trend of first improving and then declining. Please refer to Table 1 and Table 2. Comparing Examples 25 to 28, it may be indicated that with an increase of a doping amount of Bi element of the second solid-state electrolyte layer, the ionic conductivity of the second solid-state electrolyte layer gradually decreases, and the room-temperature cycle number of the battery first increases gradually and then decreases gradually. That is, the cycle performance of the battery shows a trend of first improving and then declining. Therefore, in the second solid-state electrolyte layer, by controlling a doping amount of T element in the second electrolyte, the cycle performance of the battery may be improved.

Please refer to Table 1 and Table 2. Comparing Examples 33 to 36, it may be indicated that with an increase of a doping amount of Mg element of the second solid-state electrolyte layer, the ionic conductivity of the second solid-state electrolyte layer gradually decreases, and the room-temperature cycle number of the battery first increases gradually and then decreases gradually. That is, the cycle performance of the battery shows a trend of first improving and then declining. Therefore, in the second solid-state electrolyte layer, by controlling a doping amount of E element in the second electrolyte, the cycle performance of the battery may be improved.

Please refer to Table 1 and Table 2. Comparing Examples 2, 13, and 14, Examples 18, 21, and 22, Examples 26, 29, and 30, and Examples 34, 37, and 38, it may be indicated that when the doping amounts of Sb element, In element, Bi element, or Mg element in the second solid-state electrolyte layer is the same, if one molecule in the second electrolyte includes 1.5 Cl atoms, the room-temperature cycle number of the battery reaches the maximum. Conversely, if a number of Cl atoms of one molecule in the second electrolyte is higher or lower than 1.5, the room-temperature cycle number of the battery decreases. That is, the cycle performance of the battery declines. Therefore, in the second solid-state electrolyte layer, by controlling the doping amounts of X element or Q element in the second electrolyte, the cycle performance of the battery may be improved.

Please refer to Table 1 and Table 2. Comparing Examples 2, 15, and 16, Examples 18, 23, and 24, Examples 26, 31, and 32, and Examples 34, 39, and 40, it may be indicated that when the doping amounts of Sb element, In element, Bi element, or Mg element in the second solid-state electrolyte layer is the same, if one or more of Br element or I element is doped into the second solid-state electrolyte layer, the ionic conductivity of the second solid-state electrolyte layer decreases, and the room-temperature cycle number of the battery also decreases. That is, the cycle performance of the battery declines. Therefore, in the second solid-state electrolyte layer, by controlling a number of elements included in X element or Q element in the second electrolyte, the cycle performance of the battery may be improved.

Please refer to Table 1 and Table 2. Comparing Example 18, Example 26, Example 34 and Comparative Example 1, it may be indicated that when the Sb element, the In element, the Bi element, or the Mg element is not doped in the second solid-state electrolyte layer, the ionic conductivity of the second solid-state electrolyte layer increases, but the battery quickly experiences a short circuit with almost no cycle performance, which indicates that: the Sb element, the In element, the Bi element, or the Mg element doped in the second solid-state electrolyte layer may significantly improve the cycle performance of the battery. Therefore, in the second solid-state electrolyte layer, by controlling the types of T element or E element in the second electrolyte, the cycle performance of the battery may be improved.

Please refer to Table 1 and Table 2. Comparing Example 2, Example 41, and Example 42, it may be indicated that the different first binders used in the preparation process of the first solid-state electrolyte layer and the preparation process of the second solid-state electrolyte layer result in different ionic conductivities of the first solid-state electrolyte layer and the second solid-state electrolyte layer, and also lead to different cycle performances of the battery. Specifically, when the first binder uses PTFE, the room-temperature cycle number of the battery is the highest. That is, the battery has the best cycle performance.

Please refer to Table 1 and Table 2. Comparing Example 2 and Examples 43 to 45, it may be indicated that the different preparation methods of the first solid-state electrolyte layer and the second solid-state electrolyte layer result in different ionic conductivities of the first solid-state electrolyte layer and the second solid-state electrolyte layer, and also lead to different cycle performances of the battery. Specifically, compared to the method of wet coating, the first solid-state electrolyte layer and the second solid-state electrolyte layer prepared by the method of powder extrusion molding have the maximum ionic conductivity, and the battery assembled with the above has the highest room-temperature cycle number, that is, the best cycle performance.

The disclosure also provides an electronic device. The electronic device includes at least one of the aforementioned solid-state batteries. The solid-state battery is configured to provide electrical energy. The electronic device may be a vehicle, a mobile phone, a portable device, a laptop computer, a ship, a spacecraft, an electric toy, and an electric tool. In an embodiment of the disclosure, the vehicle is for example a new energy vehicle. The new energy vehicle may be a pure electric vehicle, a hybrid vehicle, or a range-extended vehicle. The spacecraft includes an aircraft, a rocket, a space shuttle, and a spaceship. The electric toy includes stationary or mobile electric toys, for example including a game console, an electric car toy, an electric ship toy, and an electric aircraft toy. The electric tool includes a metal cutting electric tool, a grinding electric tool, an assembly electric tool, and a railway electric tool such as an electric drill, an electric grinder, an electric wrench, an electric screwdriver, an electric hammer, an impact drill, a concrete vibrator, and an electric planer. The electronic device includes the aforementioned solid-state battery, and therefore includes the advantages of the aforementioned solid-state battery, which is not repeated here.

In summary, the disclosure provides the solid-state battery and the application thereof. Through compositing the first solid-state electrolyte layer and the second solid-state electrolyte layer, preparing a high-voltage resistant heterogeneous self-supporting solid-state electrolyte membrane may enable the solid-state electrolyte membrane to have the advantage of high lithium ion conductivity, thereby improving the working efficiency of the battery. At the same time, the electrochemical redox stability of the solid-state electrolyte membrane may be improved, and therefore the electrolyte may effectively resist problems such as redox reactions and electrode interface instability. At the same time, the electrochemical window of the solid-state electrolyte membrane may be broaden, and therefore the solid-state electrolyte membrane may be compatible with high-voltage positive electrodes such as lithium-rich manganese-based or lithium nickel manganese oxide to improve the stability of the battery. Moreover, the first solid-state electrolyte layer and the second solid-state electrolyte layer may improve the cycle performance of the battery and extend the service life of the battery.

## Claims

1. A solid-state battery (10), comprising:
a first solid-state electrolyte layer (131), disposed on a positive electrode (11) side of the solid-state battery (10), an ionic conductivity of the first solid-state electrolyte layer (131) being 1×10⁻⁴S/cm to 1×10⁻²S/cm; and
a second solid-state electrolyte layer (132), disposed on a negative electrode (12) side of the solid-state battery (10), an ionic conductivity of the second solid-state electrolyte layer (132) being 1×10⁻³S/cm to 2×10⁻²S/cm.

2. The solid-state battery (10) according to claim 1, wherein the first solid-state electrolyte layer (131) comprises a first electrolyte, a chemical formula of the first electrolyte is Li₂₊ₙZr₁₋ₙMₙCl_{6-x-y}BrₓI_{y}, 0≤n≤0.6, 0≤x≤6, 0≤y≤6, x+y<6, and M is selected from at least one of V, Cr, Mn, Fe, Co, or Ni.

3. The solid-state battery (10) according to claim 2, wherein M is Fe, and a range of n is 0.01≤n≤0.5.

4. The solid-state battery (10) according to claim 1, wherein the second solid-state electrolyte layer (132) comprises a second electrolyte, a chemical formula of the second electrolyte is LiₐP_{1-b}T_{b}S_{c}O_{d}Xₑ, 5<a<6, 0<b<1, 1.5<c<5, 0<d<2.5, 4<c+d<5, 1<e<2, T is selected from at least one of Al, Ga, In, Ti, Sc, As, Sb, Bi, As, V, or Nb, and X is selected from at least one of Cl, Br, or I.

5. The solid-state battery (10) according to claim 4, wherein T is selected from at least one of Sb, In, or Bi, X is Cl, and a range of b is 0<b<0.1.

6. The solid-state battery (10) according to claim 1, wherein the second solid-state electrolyte layer (132) comprises a second electrolyte, a chemical formula of the second electrolyte is Li_{f}P_{1-g}E_{g}S_{w}O_{g}Q_{z}, 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

7. The solid-state battery (10) according to claim 6, wherein E is Mg, Q is Cl, and a range of g is 0.01≤g≤0.1.

8. The solid-state battery (10) according to claim 1, wherein a thickness of the first solid-state electrolyte layer (131) is 1µm to 100µm.

9. The solid-state battery (10) according to claim 1, wherein a thickness of the second solid-state electrolyte layer (132) is 5µm to 150µm.

10. An electronic device, comprising the solid-state battery (10) according to any one of claims 1 to 9.
